# EUROPÄISCHE PATENTANMELDUNG

(11) **EP 1 964 825 A1**
(43) Veröffentlichungstag der Anmeldung: **03.09.2008**
(21) Anmeldenummer: 07102297.4
(22) Anmeldetag: 13.02.2007
(51) Int. Cl.: C04B 40/00, C04B 14/06, C04B 14/30, C04B 18/14, C04B 22/06, C04B 22/14, C04B 24/04, C04B 24/12, C04B 22/00, C04B 22/12, C04B 22/16, C04B 103/12, C04B 103/14, C04B 111/00

(54) **Erstarrungs- und Erhärtungsbeschleuniger für hydraulische Bindemittel sowie Verfahren zu dessen Herstellung**

(71) Anmelder: Sika Technology AG, 6340 Baar (CH)
(72) Erfinder: Lootens, Didier, 8006 Zürich (CH); Flatt, Robert, 8003 Zürich (CH); Schürch, Heinz, 5728 Gontenschwil (CH); Lindlar, Benedikt, 78467 Konstanz (DE); Wombacher, Franz, 8916 Jonen (CH)
(74) Vertreter: Sika Patent Attorneys

(57) **Zusammenfassung**

Die vorliegende Erfindung betrifft einen Erstarrungs- und Erhärtungsbeschleuniger für hydraulische Bindemittel umfassend Sulfat, Aluminium, organische Säure und/oder Mineralsäure, sowie Kieselsäure, insbesondere für die Verwendung in einem Spritzbeton oder Spritzmörtel.

## Beschreibung

### Technisches Gebiet

Die Erfindung betrifft einen Erstarrungs- und Erhärtungsbeschleuniger für hydraulische Bindemittel umfassend Aluminiumsalz, Säure und Kieselsäure, ein Verfahren zur Herstellung eines Erstarrungs- und Erhärtungsbeschleuniger für hydraulische Bindemittel und die Verwendung des Erstarrungs- und Erhärtungsbeschleunigers in einem Spritzbeton oder Spritzmörtel.

### Stand der Technik

Es sind viele Substanzen bekannt, welche das Erstarren und Erhärten von Beton beschleunigen. Gebräuchlich sind beispielsweise stark alkalisch reagierende Stoffe wie Alkalihydroxide, Alkalicarbonate, Alkalisilikate, Alkalialuminate und Erdalkalichloride. Bei den stark alkalisch reagierenden Stoffen können jedoch unerwünschte Belästigungen des Verarbeiters, wie Verätzungen, auftreten und sie reduzieren die Endfestigkeit und die Dauerhaftigkeit des Betons.

Aus der EP 0 076 927 B1 sind alkalifreie Erstarrungsbeschleuniger für hydraulische Bindemittel bekannt, welche diese Nachteile vermeiden sollen. Zur Beschleunigung des Erstarrens und Erhärtens eines hydraulischen Bindemittels, wie Zement, Kalk, hydraulischer Kalk und Gips sowie daraus hergestelltem Mörtel und Beton, werden dem Gemisch, welches das genannte Bindemittel enthält, von 0.5 bis 10 Gew.%, bezogen auf das Gewicht dieses Bindemittels, eines alkalifreien Erstarrungs- und Erhärtungsbeschleuniger zugegeben, wobei dieser Beschleuniger Aluminiumhydroxid enthält. Solche Mörtel und Betone sind durch das beschleunigte Erstarren und Erhärten besonders gut geeignet als Spritzmörtel und Spritzbeton.

Aus der EP 0 946 451 B1 sind Erstarrungs- und Erhärtungsbeschleuniger in gelöster Form für hydraulische Bindemittel bekannt, welche beim Spritzen des Betons leichter dem Beton zugemischt werden können. Ein solcher Erstarrungs- und Erhärtungsbeschleuniger besteht unter anderem aus Aluminiumhydroxid, Aluminiumsalzen und organischen Carbonsäuren.

Solche bekannten Erstarrungs- und Erhärtungsbeschleuniger weisen allerdings oft eine relativ geringe Frühfestigkeit in den ersten Stunden und Tagen auf. Zudem kann sich die Verwendung von solchen Beschleunigern, negativ auf die spätere Qualität des Betons, insbesondere auf die Endfestigkeit und die Beständigkeit, auswirken.

WO 2005/075381 A1 beschreibt einen Erstarrungs- und Erhärtungsbeschleuniger umfassend Aluminiumhydroxid, Aluminiumsulfat, organische Säure und gegebenenfalls einen Stabilisator, wobei der Beschleuniger ein Molverhältnis von Aluminium zur organischen Säure von kleiner als 0.65 aufweist.

In WO 99/18045 und in WO 01/30720 A1 wird ein Beschleuniger beschrieben, welcher eine wässrige Suspension aus Siliciumoxid, Sulfat und Aluminiumverbindungen enthält. Ein solcher Beschleuniger weist allerdings bei hoher Ionenkonzentration eine ungenügende Stabilität der Lösung auf.

EP 0 519 155 B1 beschreibt einen Spritzbeton und -mörtel, zu dessen Herstellung man zur Verminderung der Staubbildung und des Rückpralls bei der Verarbeitung Kieselsäuresol dazugibt. Bei der Herstellung kann zusätzlich ein Beschleuniger dazugegeben werden. Die Zugabe des Beschleunigers und des Kieselsäuresols erfolgt wegen mangelnder Stabilität des Gemischs getrennt.

EP 0 931 030 B1 beschreibt einen Beton oder Mörtel erhältlich durch Mischen von hydraulischen Bindemitteln, Zuschlagstoffen, Wasser und kolloidalem Siliciumdioxid. Es wird beschrieben, dass in bisher bekannten Mischungen von kolloidalem Siliciumdioxid und Beton oder Mörtel das kolloidale Siliciumdioxid in Lösungen zu Aggregation, d.h. zu Gelierung, Koagulation bzw. Flockenbildung neigte. Daher wurde in EP 0 931 030 B1 das kolloidale Siliciumdioxid vorzugsweise mit alkalischen Substanzen, z.B. durch Ionen von Alkalimetallen wie Na, K oder Li oder durch Ammoniumionen oder eine Kombination davon stabilisiert. Bei der Herstellung von Spritzbeton mit kolloidalem Siliciumdioxid wird zudem vorzugsweise kein Beschleuniger verwendet.

### Darstellung der Erfindung

Der Erfindung liegt die Aufgabe zugrunde, einen Erstarrungs- und Erhärtungsbeschleuniger für hydraulische Bindemittel bereitzustellen, welcher die Nachteile des Standes der Technik überwindet und eine möglichst hohe Festigkeit bei möglichst langer Stabilitätsdauer des Beschleunigers aufweist.

Erfindungsgemäss wird dies durch die Merkmale des ersten Anspruches erreicht. Überraschenderweise haben sich Erstarrungs- und Erhärtungsbeschleuniger umfassend Sulfat, Aluminium, organische Säure und/oder Mineralsäure und Kieselsäure als besonders geeignet und stabil erwiesen.

Die Vorteile der Erfindung sind unter anderem darin zu sehen, dass durch die erfindungsgemässen Beschleuniger eine hohe Stabilität, d.h. Stabilisierung der Beschleuniger-Lösung erzielt wird und dass hohe Festigkeiten in den ersten Stunden und Tagen, wie auch eine hohe Beständigkeit des Spritzbetons erzielt werden.

Weitere vorteilhafte Ausgestaltungen der Erfindung ergeben sich aus der Beschreibung und den Unteransprüchen.

### Weg zur Ausführung der Erfindung

Erfindungsgemässe Erstarrungs- und Erhärtungsbeschleuniger für hydraulische Bindemittel umfassen Sulfat, Aluminium, organische Säure und/oder Mineralsäure, und Kieselsäure. Solche Beschleuniger sind auf verschiedenen Wegen herstellbar. Der Beschleuniger ist vorzugsweise ein wasserbasierender Beschleuniger, der als Lösung, mit teilweise fein dispergierten Partikeln, oder als Dispersion auftreten kann.

Der erfindungsgemässe Beschleuniger ist vorzugsweise alkali- und chloridfrei. Unter einem alkali- und chloridfreien Beschleuniger wird in der Bauchemie üblicherweise ein Beschleuniger verstanden, welcher weniger als 1 Gew.-% Alkali-, bzw. Alkalimetall- oder Chloridionen aufweist, bezogen auf das Gewicht des Beschleunigers.

Überraschenderweise wurde gefunden, dass die Verwendung von Kieselsäure im erfindungsgemässen Beschleuniger, auch in hoher Menge, zu besonders stabilen Lösungen beziehungsweise Dispersionen führt und besonders gute Resultate erzielt werden.

Unter dem Begriff "Kieselsäure" wird in der ganzen vorliegenden Schrift eine Kieselsäure verstanden, zu der neben der ortho-Kieselsäure alle Formen des Siliciumdioxids, also das Anhydrid der ortho-Kieselsäure, das eigentliche Siliciumdioxid, wie auch kolloidale, gefällte oder pyrogene Kieselsäure oder Silicafume, gezählt werden. Die im erfindungsgemässen Beschleuniger verwendete Kieselsäure ist oder enthält daher vorzugsweise kolloidale, gefällte, pyrogene Kieselsäure oder Mikrokieselsäure (Silicafume) oder ein Gemisch davon. Beispiele besonders geeigneter Kieselsäuren sind kolloidale Kieselsäure, Silicafume, Aerosil® oder Sipernat®. Die für die vorliegende Erfindung besonders geeignete Kieselsäure weist kompakte oder poröse Partikel auf, typischerweise mit einer spezifische Oberfläche von 50-1000 m²/g, insbesondere von 80 bis 500 m²/g und einer Partikelgrösse im Bereich von 4 bis 1000 nm, insbesondere von 7 bis 500 nm. Besonders bevorzugt sind kolloidale Kieselsäurepartikel, sogenannte Nanopartikel. Die im erfindungsgemässen Beschleuniger verwendeten Kieselsäurepartikel können eine unterschiedliche Grössenverteilung aufweisen. Es können also beispielsweise kleine und grosse Kieselsäurepartikel gemeinsam im Beschleuniger vorliegen. Die für die vorliegende Erfindung geeigneten Kieselsäurepartikel können auch Abfallprodukte sein, welche beispielsweise durch chemisch-mechanisches Polieren (CMP) von Siliciumdioxidprodukten erhalten werden. Die Oberfläche der Kieselsäurepartikel kann auch chemisch modifiziert sein.

Der Gehalt an Siliciumdioxid, beziehungsweise der Feststoffgehalt der Kieselsäure, bezogen auf das Gesamtgewicht des Beschleunigers, beträgt vorzugsweise 0.1 bis 40 Gew.-%, bevorzugt 1 bis 30 Gew.-%, noch mehr bevorzugt 3 bis 20 Gew.-%, insbesondere 6 bis 15 Gew.-%.

Vorzugsweise liegt die Kieselsäure als Kieselsäuredispersion vor und enthält Kieselsäurepartikel. Als flüssiges Medium wird insbesondere Wasser verwendet. Besonders bevorzugt als Kieselsäuredispersion ist Silicasol. Das Silicasol enthält vorzugsweise kolloidale Kieselsäure, insbesondere amorphe kolloidale Kieselsäure, mit einer Partikelgrösse im Bereich von 4 bis 1000 nm, insbesondere von 7 bis 500 nm. Typischerweise hat das Silicasol eine spezifische Oberfläche von 50-700 m²/g, insbesondere von 80 bis 500 m²/g. Als Kieselsäuredispersion ebenfalls besonders geeignet ist eine Dispersion mit Silicafume.

Der erfindungsgemässe Beschleuniger umfasst vorzugsweise ein Silicasol mit einem Gehalt an Siliciumdioxid, bezogen auf das Gesamtgewicht des Silicasols, von 1 bis 60 Gew.-%, insbesondere 5 bis 50 Gew.-%, noch mehr bevorzugt 10 bis 40 Gew.-%.

Vorzugsweise beträgt der Anteil der Kieselsäuredispersion, insbesondere an Silicasol, im Beschleuniger 1 bis 60 Gew.-%, bezogen auf das Gesamtgewicht des Beschleunigers. Besonders bevorzugt sind Beschleuniger, welche einen Anteil an Silicasol, bzw. an Silicafume-Dispersion von mehr als 20 Gew.-% aufweisen, insbesondere mit einem Anteil von 23 bis 55 Gew.-%, noch mehr bevorzugt mit einem Anteil von 25 bis 40 Gew.-%.

Erfindungsgemässe Erstarrungs- und Erhärtungsbeschleuniger umfassen vorteilhafterweise:
- 14 bis 25 Gew.-% Sulfat,
- 4 bis 12% Gew.-% Aluminium (bzw. 7,6 bis 20.8% Al₂O₃),
- 1 bis 22 Gew.-% organische Säure, und/oder 0.1 bis 10 Gew.-% Mineralsäure,
- 0.1 bis 40 Gew.-% Siliciumdioxid oder Feststoffgehalt der Kieselsäure,
- 0 bis 6 Gew.-% Magnesium
- 0 bis 10 Gew.-% Alkanolamin,
- 0 bis 5 Gew.-% Fliessmittel,
- sowie Wasser.

Die vorgenannten Stoffe sind dabei, mit Ausnahme der Kieselsäure bzw. des Siliciumdioxids, vorteilhafterweise als Ionen in Lösung anzutreffen, können jedoch auch in komplexierter Form oder ungelöst im Beschleuniger auftreten. Die Ionen können auf der äusseren oder inneren Oberfläche der Kieselsäurepartikel, bzw. des Siliciumdioxids, absorbiert sein und diese absorbierten Ionen können durch weitere Ionen komplexiert sein. Sie können also auch als oligomere, komplexe Partikel bzw. Verbindungen vorliegen.

In einer bevorzugten Ausführungsform umfasst der erfindungsgemässe Beschleuniger 17.5 bis 22 Gew.-% Sulfat, 7 bis 10 Gew.-% Aluminium und 5 bis 16 Gew.-% organische Säure und/oder 0.2 bis 3 Gew.-% Mineralsäure, und mehr als 6 Gew.-% Siliciumdioxid, beziehungsweise mehr als 20 Gew.-% Silicasol, bezogen auf das Gesamtgewicht des Beschleunigers.

Der Beschleuniger kann zusätzlich Magnesium umfassen, vorzugsweise in einer Menge von 0.01 bis 6 Gew.-%, insbesondere 0.4 bis 3.1 Gew.-%, bezogen auf das Gesamtgewicht des Beschleunigers.

Weiterhin kann der erfindungsgemässe Beschleuniger zusätzlich Glycerin umfassen

Ein erfindungsgemässer Erstarrungs- und Erhärtungsbeschleuniger für hydraulische Bindemittel ist beispielsweise herstellbar aus mindestens Aluminiumsulfat und/oder Schwefelsäure, Aluminiumhydroxid, organischer Säure und/oder Mineralsäure, und Kieselsäure.

Ein bevorzugter erfindungsgemässer Beschleuniger ist zum Beispiel herstellbar aus mindestens 30 bis 50 Gew.-% Aluminiumsulfat (Al₂(SO₄)₃*14H₂O), 0.1 bis 20 Gew.-% Aluminiumhydroxid und 1 bis 22 Gew.-% organische Säure und/oder 0.1 bis 10 Gew.-% Mineralsäure, und Kieselsäure in einer Menge von 0.1 bis 40 Gew.-% Siliciumdioxid, beziehungsweise 1 bis 60 Gew.-% Kieselsäuredispersion, bezogen auf das Gesamtgewicht des Beschleunigers.

In einer besonders bevorzugten Ausführungsform wird bei der Herstellung des erfindungsgemässen Beschleunigers mindestens 35 bis 45 Gew.-% Aluminiumsulfat (Al₂(SO₄)₃*14H₂O), 12 bis 18 Gew.-% Aluminiumhydroxid, 5 bis 16 Gew.-% organische Säure und/oder 0.2 bis 3 Gew.-% Mineralsäure, und 23 bis 55 Gew.-% Silicasol verwendet wird, jeweils bezogen auf das Gesamtgewicht des Beschleunigers.

Das zur Herstellung verwendete Aluminiumsulfat kann eine unterschiedliche Menge an Kristallwasser enthalten. Das typischerweise verwendete Aluminiumsulfat ist das Aluminiumsulfat-Tetradecahydrat (Al₂(SO₄)₃*14H₂O). Es wird üblicherweise auch als 17% Aluminiumsulfat bezeichnet, weil es 17% Al₂O₃ enthält. Die in dieser vorliegenden Schrift erwähnten Mengenangaben betreffend Aluminiumsulfat beziehen sich auf das Ab(SO₄)₃*14H₂O. Falls das Aluminiumsulfat andere Mengen an Kristallwasser enthält, sind die für die vorliegende Erfindung benötigten Mengen an Aluminiumsulfat einfach zu berechnen. So würde 30 bis 50 Gew.-% Al₂(SO₄)₃*14H₂O einer Menge eines kristallwasserfreien Al₂(SO₄)₃ von etwa 17 bis 29 Gew.-% entsprechen.

Das Aluminiumsulfat kann auch durch eine Reaktion von Aluminiumhydroxid mit Schwefelsäure bei der Herstellung des Beschleunigers erzeugt werden, wobei sich entsprechend Sulfationen in der wässrigen Lösung bilden. Allgemein kann Aluminiumsulfat durch eine Reaktion einer basischen Aluminiumverbindung mit Schwefelsäure erzeugt werden.

Das Molverhältnis von Aluminium zur organischen Säure ist bevorzugt größer als 0.67. Insbesondere bevorzugt ist ein Molverhältnis von Aluminium zur organischen Säure von mehr als 1. Der pH-Wert des Beschleunigers wird vorzugsweise auf pH 2 bis 4, insbesondere pH 2.5 bis 3.5, eingestellt.

Das Molverhältnis von Aluminium zu Sulfat ist vorzugsweise grösser als 0.5. Vorzugsweise ist das Molverhältnis von Aluminium zu Sulfat größer als 0.8.

Als organische Säure wird vorzugsweise eine Carbonsäure, besonders bevorzugt eine Mono- oder Dicarbonsäure verwendet. Besonders bevorzugt ist eine Monocarbonsäure, insbesondere die Ameisensäure, es können jedoch auch andere gleichwirkende organischen Säuren wie z.B. Essigsäure verwendet werden. Vorzugsweise wird die organische Säure in einer Menge von 1 bis 22 Gew.-%, bevorzugt von 2 bis 17 Gew.-%, noch mehr bevorzugt von 5 bis 16 Gew.%, insbesondere 6 bis 14 Gew.-%, bezogen auf das Gesamtgewicht des Beschleunigers, verwendet.

Als Mineralsäure wird vorzugsweise Phosphorsäure, phosphorige Säure, Borsäure oder Flusssäure, insbesondere Phosphorsäure, verwendet.

In einer bevorzugten Ausführungsform wird als Säure im Beschleuniger nur eine Monocarbonsäure, insbesondere Ameisensäure, verwendet. Ebenfalls geeignet ist die kombinierte Verwendung von einer organischen Säure mit einer Mineralsäure, insbesondere mit Phosphorsäure. Beispielsweise wurden gute Resultate erzielt mit Phosphorsäure und Oxalsäure, insbesondere mit 0.5 bis 3 Gew.-% Phosphorsäure und 0.1 bis 2 Gew.-% Oxalsäure, bezogen auf das Gesamtgewicht des Beschleunigers.

Vorzugsweise wird bei der Herstellung Aluminiumhydroxid in einer Menge von weniger als 0.1 bis 20 Gew.-%, insbesondere 9 bis 18 Gew.%,, noch mehr bevorzugt 12 bis 18 Gew.-%, bezogen auf das Gesamtgewicht des Beschleunigers, verwendet. Das Aluminiumhydroxid kann in amorpher oder kristalliner Form eingesetzt werden. Vorteilhafterweise wird amorphes Aluminiumhydroxid verwendet. Das Alumiumhydroxid kann auch in der Form von Aluminiumhydroxidcarbonat, Aluminiumhydroxysulfat oder ähnlichem verwendet werden.

Zusätzlich kann bei der Herstellung des Beschleunigers Magnesiumhydroxid Mg(OH)₂, vorzugsweise in einer Menge von 0.1 bis 10 Gew.-%, insbesondere 1 bis 5 Gew.-%, bezogen auf das Gesamtgewicht des Beschleunigers, verwendet werden. Anstelle des Magnesiumhydroxids kann auch die entsprechende Menge einer anderen Magnesiumverbindung, insbesondere eines Magnesiumsalzes, beispielsweise Magnesiumoxid MgO, Magnesiumoxyhydroxid, oder Magnesiumcarbonat, verwendet werden.

Der erfindungsgemässe Beschleuniger kann bei der Herstellung zusätzlich Alkanolamin, beispielsweise in einer Menge von 0.1 - 10 Gew.-%, bezogen auf das Gesamtgewicht des Beschleunigers, enthalten. Als Alkanolamin wird vorteilhafterweise Diethanolamin DEA verwendet.

Der erfindungsgemässe Beschleuniger kann zusätzlich Fliessmittel, insbesondere Polycarboxylate, oder Stabilisatoren umfassen.

Selbstverständlich kann der erfindungsgemässe Beschleuniger weitere geeignete, dem Fachmann bekannte, Zusatzmittel umfassen. Vorzugsweise enthält er aber keine weiteren Verdickungsmittel oder Thixotropiermittel.

Ein bevorzugter erfindungsgemässer Erstarrungs- und Erhärtungsbeschleuniger ist also herstellbar aus (in Gew.-%, jeweils bezogen auf das Gesamtgewicht des Beschleunigers):
- 30 - 50 Gew.-% Aluminiumsulfat (Al₂(SO₄)₃*14H₂O),
- 0.1 - 20 Gew.-% Aluminiumhydroxid,
- 1 - 22 Gew.-% organische Säure und/oder 0.1 - 10 Gew.-% Mineralsäure,
- 0.1 - 40 Gew.-% Siliciumdioxid oder Feststoffgehalt der Kieselsäure, beziehungsweise 1 - 60 Gew.-% Kieselsäuredispersion,
- 0 - 6 Gew.-% Magnesium
- 0 - 10 Gew.-% Alkanolamin,
- 0 - 8 Gew.-% Glycerin,
- 0 - 5 Gew.-% Fliessmittel,
- gegebenenfalls restliche Menge Wasser.

Falls die Kieselsäure beispielsweise als Kieselsäuredispersion, insbesondere als Silicasol, vorliegt, kann das Wasser vollständig in der Kieselsäuredispersion vorgelegt werden und es muss bei der Herstellung des Beschleunigers kein zusätzliches Wasser verwendet werden. Dies ist besonders vorteilhaft.

Wenn das verwendete Aluminiusulfat eine kleinere Menge an Kristallwasser enthält, kann entsprechend die verwendete Menge an Kieselsäuredispersion oder an zusätzlichem Wasser angepasst, insbesondere erhöht, werden.

Zur Herstellung besonders vorteilhafter Erstarrungs- und Erhärtungsbeschleuniger werden im wesentlichen verwendet (in Gew.-%):
- 35 - 45 Gew.-% Aluminiumsulfat (Al₂(SO₄)₃*14H₂O), vorzugsweise 38 - 43 Gew.-%,
- 2 - 17 Gew.-% organische Säure, insbesondere 6-14 Gew.-%, und/oder 0.2 - 3 Gew.-% Mineralsäure,
- 9 - 18 Gew.-% Aluminiumhydroxid (AI(OH)₃), insbesondere 12 - 18 Gew.-%,
- 6 - 20 Gew.-% Siliciumdioxid oder Feststoffgehalt der Kieselsäure, beziehungsweise 23-55 Gew.-% Silicasol,
- 0 - 5 Gew.-% Magnesiumhydroxid
- 0 - 3 Gew.-% Alkanolamin,
- 0 - 3 Gew.-% Fliessmittel,
- gegebenenfalls restliche Menge Wasser.

Im Vergleich zu herkömmlichen Erstarrungsbeschleunigern konnte ein stabiler Erstarrungs- und Erhärtungsbeschleuniger mit Kieselsäure erhalten werden, obwohl der Beschleuniger eine hohe lonenstärke aufweist. Überraschenderweise konnten Beschleuniger hergestellt werden, in denen Silicadispersionen, beispielsweise Silicasol, auch in hohen Mengen stabil sind, auch wenn sie mit Beschleunigern mit hoher lonenstärke vermischt wurden. Dies wurde mit dem erfindungsgemässen Beschleuniger, welche eine bestimmte Menge an organischer Säure und/oder Mineralsäure enthält, erreicht. Die Tatsache, dass ein Erstarrungs- und Erhärtungsbeschleuniger mit einer Dispersion mit kolloidalen Kieselsäurepartikel zu stabilen Mischungen führt, konnte nicht erwartet werden, da in der Regel kolloidale Kieselsäure in einem Medium mit hoher lonenstärke ausfällt, wie beispielsweise in EP 0 931 030 B1 oder US 7,163,358 B2 erwähnt. Zudem wurde überraschenderweise gefunden, dass sogar kleine Moleküle, wie beispielsweise Formiate, den Beschleuniger stabilisieren konnten.

Durch die reduzierte Menge an benötigtem Wasser, insbesondere bei teilweise bis vollständigem Wasserersatz durch die wässrige Kieselsäuredispersion, insbesondere Silicasol, kann ein besonders beständiger Mörtel oder Beton erhalten werden, welcher ausgezeichnete mechanische Eigenschaften, insbesondere verbesserte Frühfestigkeit, besitzt, ohne die Endfestigkeit stark zu beeinflussen und ohne den Aluminiumanteil im Beschleuniger zu erhöhen. Auch die Entwicklung der Druckfestigkeit des Spritzbetons in den ersten Stunden und Tagen wird sehr positiv beeinflusst und ist besser als bei herkömmlich verwendeten Beschleunigern.

Die erfindungsgemässen Beschleuniger können beispielsweise als Lösung, Dispersion oder pulverförmig vorliegen, wobei es bevorzugt ist, dass ein als Pulver vorliegender Beschleuniger vor der Anwendung in Wasser gelöst oder dispergiert wird.

Die vorliegende Erfindung betrifft zudem ein Verfahren zur Herstellung des Beschleunigers nach einem der vorhergehenden Ansprüche, dadurch gekennzeichnet, dass Wasser, Kieselsäure und Säure vorgelegt wird, danach Aluminiumhydroxid und anschliessend das Aluminiumsulfat zugegeben wird. Das Wasser und die Kieselsäure, insbesondere kolloidale Kieselsäurepartikel oder Silicafume, können dabei als Kieselsäuredispersion vorliegen, oder die Kieselsäurepartikel können vorerst in Wasser dispergiert werden. Die Säure wird zu dieser Kieselsäuredispersion zugegeben und anschliessend wird das Aluminiumhydroxid zugegeben. Vorzugsweise nach Auflösung des Aluminiumhydroxids werden das Aluminiumsulfat und gegebenenfalls weitere Zusätze zugegeben. Insbesondere bei der Verwendung einer Silicafume-Dispersion ist dieses Verfahren besonders bevorzugt.

Weiterhin betrifft die vorliegende Erfindung ein Verfahren zur Beschleunigung des Erstarrens und Erhärtens von hydraulischen Bindemitteln sowie daraus hergestelltem Mörtel oder Beton, dadurch gekennzeichnet, dass dem Gemisch, welches hydraulische Bindemittel enthält, ein erfindungsgemässer Erstarrungs- und Erhärtungsbeschleuniger in einer Menge von 0.1 bis 15 Gew.-%, insbesondere von 1 bis 10 Gew.-%, bezogen auf das Gewicht des hydraulischen Bindemittels, zugegeben wird.

Der erfindungsgemässe Beschleuniger kann zur Beschleunigung des Abbindens und Erhärtens von hydraulischen Bindemitteln, hydraulischen Bindemitteln in Abmischung mit latent hydraulischen Bindemitteln oder inerten Füllstoffen, Mörtel oder Beton verwendet werden. Eine bevorzugte Verwendung erfolgt im Spritzmörtel oder Spritzbeton nach dem Trocken- oder Nass-spritzverfahren, wobei der Beschleuniger dem trockenen oder mit Wasser angemachten Bindemittel, Mörtel oder Beton in der Förderleitung, der Vorbenetzungsdüse oder der Spritzdüse, direkt in die Mischung oder ins Anmachwasser zugegeben resp. zudosiert wird. Vorzugsweise wird ein Beschleuniger in Form einer Lösung oder Dispersion mit einem Flüssigdosiergerät zudosiert, ein pulverförmiger Beschleuniger mit einem Pulverdosiergerät.

Beispiele für Bindemittel, deren Erhärten und Abbinden durch den erfindungsgemässen Beschleuniger resp. das Verfahren beschleunigt werden können, sind Zement wie Mischzemente, Kalk, hydraulischer Kalk und Gips, je alleine oder in Abmischung mit latent hydraulischen Bindemitteln oder inerten Füllstoffen, und Beispiele für Mischungen, welche diese Bindemittel enthalten, sind Mörtel und Beton.

Ein weiterer Gegenstand der vorliegenden Erfindung ist zudem ein härtbares resp. gehärtetes Bindemittel enthaltendes Gemisch, insbesondere Spritzbeton oder Spritzmörtel, das den erfindungsgemässen Beschleuniger enthält.

Durch die Verwendung der erfindungsgemässen Erstarrungs- und Erhärtungsbeschleuniger wird ein rasches Abbinden der entsprechenden Bindemittel oder der Mischungen, die derartige Bindemittel enthalten, bewirkt, und es werden hohe Anfangs- und Endfestigkeiten erreicht. Die Abbinde- und Erhärtungsbeschleuniger wirken weder auf den Verarbeiter noch auf die Umwelt ätzend oder toxisch.

### Ausführungsbeispiele

Es wurden mehrere Proben erfindungsgemässer Beschleuniger gemäss den in Tabelle 1 angegeben Werten hergestellt, wobei Aluminiumsulfat mit 17% Al₂O₃ und amorphes Aluminiumhydroxid sowie Silicasol mit 30 Gew.% Silicapartikel bezogen auf das Gewicht des Silicasols, verwendet wurden, und mit Vergleichsbeispielen ohne Kieselsäure (B1, B2) bzw. ohne Säure (B3) und mit einem herkömmlichen Beschleuniger (B5) verglichen. Als herkömmlicher Beschleuniger (B4) wurde Gecedral® F2000W von BK Giulini GmbH verwendet. In der letzten Spalte wird der Siliciumdioxidgehalt (SiO₂) in Gewichtsprozent bezogen auf das Gesamtgewicht des Beschleunigers angegeben.

**Tabelle 1: Probenzusammensetzung in Gew.-%**

| Nr. | H₂O | Al(OH)₃ | Al₂(SO₄)₃ *14H₂O | HCOOH (85%) | H₃PO₄ | Oxalsäure | DEA | Silicasol (30%) | SiO₂ |
|---|---|---|---|---|---|---|---|---|---|
| A1 | 0 | 16 | 41 | 12 | 0 | 0 | 0 | 31 | 9 |
| A2 | 25.9 | 16 | 35 | 0 | 0.8 | 0.5 | 1.8 | 20 | 6 |
| A3 | 0 | 16 | 41 | 3 | 0 | 0 | 0 | 40 | 12 |
| A4 | 0 | 16 | 41 | 9 | 0 | 0 | 0 | 34 | 10 |
| A5 | 0 | 16 | 41 | 20 | 0 | 0 | 0 | 23 | 7 |
| B1 | 31 | 16 | 41 | 12 | 0 | 0 | 0 | 0 | 0 |
| B2 | 45.9 | 16 | 35 | 0 | 0.8 | 0.5 | 1.8 | 0 | 0 |
| B3 | 0 | 16 | 41 | 0 | 0 | 0 | 0 | 43 | 13 |

Zur Herstellung des Beschleunigers wurden Wasser und Silicasol, oder nur Silicasol, vorgeheizt vorgelegt. Die Säure wurde dem Wasser, bzw. dem Silicasol, zugegeben, und anschliessend wurde das Aluminiumhydroxid zugegeben. Danach wurden das Alumiumsulfat und das Diethanolamin zugegeben. Das Ganze wurde dann solange gerührt, bis die Reaktion abgeklungen war.

Dabei hat sich gezeigt, dass insbesondere mit den Beschleunigern der Beispiele A1, A2, und A4 eine sehr gute Lagerstabilität von über acht Monaten erzielt werden konnte. Die Beschleuniger der Beispiele A3 und A5 bildeten nach einigen Wochen ein schwaches Gel, während der Beschleuniger ohne Säure nach Beispiel B3 nach 7 Tagen fest wurde.

Hydraulischen Bindemitteln können 0.1 bis 15 Gew.-% des erfindungsgemässen Beschleunigers zugegeben werden.

Zur Bestimmung der Wirksamkeit des erfindungsgemässen Beschleunigers nach den Beispielen A1, A2 und A4 sowie der Vergleichsbeispiele B1, B2 und B4 wurde einer Mörtelmischung (Korngrösse 0-2.2 mm, w/z = 0,48 und 1,0% Sika® ViscoCrete® SC305 (erhältlich bei Sika Schweiz AG)) jeweils 6% des Beschleunigers bezogen auf den Gehalt des hydraulischen Bindemittels zugemischt in einem Hobart-Mischer. Als hydraulisches Bindemittel wurde Portlandzement verwendet. Die Prüfung erfolgte an Prismen (40 x 40 x 160mm) mittels eines Nadelpenetrometers (RMU) zur Bestimmung des Eindringwiderstandes bei 2200g in Minuten, und mittels Proctometers (Mecmesin BFG500) zur Bestimmung der Druckfestigkeit nach zwei bzw. sechs Stunden und nach einem Tag bzw. sieben Tagen. Die Werte der Druckfestigkeit werden in MPa angegeben. Je tiefer die Werte des Penetrometers in Minuten, desto schneller härtet die Mörtelprobe aus und desto schneller ist der Beschleuniger. Je höher die Festigkeit, desto schneller ist der Beschleuniger. (siehe Tabelle 3)

Die vergleichbaren Beispiele A1 und B1 bzw. A2 und B2 zeigen, dass einerseits die Zeit des Eindringwiderstandes bei 2200g bei Mörtelmischungen mit einem Beschleuniger mit Silicasol bis 40 % kürzer sind und dass andererseits auch die Druckfestigkeit nach zwei Stunden bis 49 % höher und nach 24 Stunden noch bis 13 % höher ist bei der Verwendung von Beschleunigern mit Silicasol.

**Tabelle 3: Resultate aus Mörtelversuchen**

| Beispiel | A1 | A2 | A4 | B1 | B2 | B4 |
|---|---|---|---|---|---|---|
| Penetrometer bei 2200g in Zeit [Minuten] | 37 | 14 | 55 | 62 | 21 | 45 |
| Festigkeit nach 2 Stunden, [MPa] | 0.25 | 0.46 | 0.18 | 0.16 | 0.31 | 0.19 |
| Festigkeit nach 6 Stunden, [MPa] | 1.8 | 2.1 | 1.6 | 1.6 | 2.1 | 2.2 |
| Festigkeit nach einem Tag, [MPa] | 14.1 | 10.8 | 12.9 | 12.7 | 9.6 | 10.3 |
| Festigkeit nach sieben Tagen, [MPa] | 35.2 | 31 | 33.4 | 34.9 | 29.8 | 28.9 |

Die Beispiele A1 und B1 wurden zusätzlich anhand von Spritzversuchen mit einer Mörtelmischung mit einer Korngrösse von 0-4 mm, w/z = 0,49 und 1,0% Sika® ViscoCrete® SC305 (erhältlich bei Sika Schweiz AG), bezogen auf den Gehalt des hydraulischen Bindemittels, geprüft (Tabelle 4). Für die Anwendung als Spritzmörtel wurden jeweils 5% des Beschleunigers bezogen auf den Gehalt des hydraulischen Bindemittels zugemischt. Als hydraulisches Bindemittel wurde Portlandzement verwendet. Die Zumischung erfolgte jeweils im Bereich der Spritzdüse beim Verarbeiten des Spritzbetons. Nach dem Auftragen des Spritzbetons wurde die Festigkeit des gespritzten Betons mittels eines Proctometers (Mecmesin BFG500) nach drei bis 60 Minuten, und mittels eines Hilti-Bolzensetzgerätes nach vier bzw. fünf Stunden ermittelt.

Die Resultate mit dem Beschleuniger mit Silicasol (A1) zeigen durchgehend eine höhere Frühfestigkeit als die Resultate mit einem Beschleuniger ohne Silicasol (B1).

**Tabelle 4: Resultate aus Spritversuchen in [MPa] nach einer bestimmten Zeit (min = Minuten, h = Stunden)**

| Festigkeit [MPa] | 3 min | 6 min | 10 min | 22 min | 30 min | 46 min | 1 h | 4h | 5h |
|---|---|---|---|---|---|---|---|---|---|
| A1 | 0.12 | 0.22 | 0.35 | 0.48 | 0.66 | 1.03 | 1.1 | 3.9 | 5.8 |
| B1 | 0.1 | 0.18 | 0.24 | 0.34 | 0.47 | 0.69 | 0.9 | 2.7 | 4.3 |

Selbstverständlich ist die Erfindung nicht auf die gezeigten und beschriebenen Ausführungsbeispiele beschränkt.

## Patentansprüche

1. Erstarrungs- und Erhärtungsbeschleuniger für hydraulische Bindemittel, umfassend Sulfat, Aluminium, organische Säure und/oder Mineralsäure, und Kieselsäure.

2. Beschleuniger nach Anspruch 1, **dadurch gekennzeichnet, dass** die Kieselsäure kolloidale, gefällte oder pyrogene Kieselsäure oder Silicafume oder ein Gemisch davon enthält.

3. Beschleuniger nach Anspruch 2, **dadurch gekennzeichnet, dass** die Kieselsäure als Kieselsäuredispersion vorliegt.

4. Beschleuniger nach Anspruch 3, **dadurch gekennzeichnet, dass** die Keiselsäuredispersion Silicasol ist.

5. Beschleuniger nach Anspruch 4, **dadurch gekennzeichnet, dass** das Silicasol kolloidale Kieselsäure mit einer Partikelgrösse im Bereich von 4 bis 1000 nm, insbesondere von 7 bis 500 nm, enthält.

6. Beschleuniger nach einem der Ansprüche 4 oder 5, **dadurch gekennzeichnet, dass** das Silicasol einen Gehalt an Siliciumdioxid, bezogen auf das Gesamtgewicht des Silicasols, von 1 bis 60 Gew.-%, insbesondere 5 bis 50 Gew.-% aufweist.

7. Beschleuniger nach einem der vorhergehenden Ansprüche, **dadurch gekennzeichnet, dass** der Feststoffgehalt der Kieselsäure, insbesondere der Gehalt an Siliciumdioxid, bezogen auf das Gesamtgewicht des Beschleunigers 0.1 bis 40 Gew.-%, insbesondere 2 bis 20 Gew.-% beträgt.

8. Beschleuniger nach einem der Ansprüche 3 bis 7, **dadurch gekennzeichnet, dass** der Anteil der Kieselsäuredispersion im Beschleuniger 1 bis 60 Gew.-% umfasst, bezogen auf das Gesamtgewicht des Beschleunigers.

9. Beschleuniger nach Anspruch 8, **dadurch gekennzeichnet, dass** er mehr als 20 Gew.-% einer Kieselsäuredispersion umfasst, bezogen auf das Gesamtgewicht des Beschleunigers.

10. Beschleuniger nach Anspruch 9, **dadurch gekennzeichnet, dass** er 25 bis 55 Gew.-% einer Kieselsäuredispersion umfasst, bezogen auf das Gesamtgewicht des Beschleunigers.

11. Beschleuniger nach einem der vorhergehenden Ansprüche, **dadurch gekennzeichnet, dass** er 14 bis 25 Gew.-% Sulfat, 4 bis 12 Gew.-% Aluminium und 1 bis 22 Gew.-% organische Säure und/oder 0.1 bis 10 Gew.-% Mineralsäure umfasst, bezogen auf das Gesamtgewicht des Beschleunigers.

12. Beschleuniger nach Anspruch 11, **dadurch gekennzeichnet, dass** er 17.5 bis 22 Gew.-% Sulfat, 7 bis 10 Gew.-% Aluminium und 5 bis 16 Gew.-% organische Säure und/oder 0.2 bis 3 Gew.-% Mineralsäure umfasst, bezogen auf das Gesamtgewicht des Beschleunigers.

13. Beschleuniger nach einem der vorhergehenden Ansprüche, **dadurch gekennzeichnet, dass** die organische Säure eine Monocarbonsäure ist.

14. Beschleuniger nach Anspruch 13, **dadurch gekennzeichnet, dass** die Monocarbonsäure eine Ameisensäure ist.

15. Beschleuniger nach einem der vorhergehenden Ansprüche, **dadurch gekennzeichnet, dass** die Mineralsäure Phosphorsäure, phosphorige Säure, Borsäure oder Flusssäure ist.

16. Beschleuniger nach einem der vorhergehenden Ansprüche, **dadurch gekennzeichnet, dass** das Molverhältnis von Aluminium zur Säure grösser als 0.67 ist.

17. Beschleuniger nach einem der vorhergehenden Ansprüche, **dadurch gekennzeichnet, dass** das Molverhältnis von Aluminium zu Sulfat grösser als 0.5 ist.

18. Erstarrungs- und Erhärtungsbeschleuniger für hydraulische Bindemittel nach einem der vorhergehenden Ansprüche, herstellbar aus mindestens Aluminiumsulfat und/oder Schwefelsäure, Aluminiumhydroxid, Säure und Kieselsäure, wobei als Aluminiumhydroxid insbesondere amorphes Aluminiumhydroxid verwendet wird.

19. Beschleuniger nach einem der vorhergehenden Ansprüche, **dadurch gekennzeichnet, dass** bei der Herstellung mindestens 30 bis 50 Gew.-% Aluminiumsulfat (Al₂(SO₄)₃*14H₂O), 0.1 bis 20 Gew.-% Aluminiumhydroxid und 1 bis 22 Gew.-% organische Säure und/oder 0.1 bis 10 Gew.-% Mineralsäure, bezogen auf das Gesamtgewicht des Beschleunigers, verwendet wird.

20. Beschleuniger nach einem der vorhergehenden Ansprüche, **dadurch gekennzeichnet, dass** bei der Herstellung mindestens 35 bis 45 Gew.-% Aluminiumsulfat (Al₂(SO₄)₃*14H₂O), 9 bis 18 Gew.-% Aluminiumhydroxid und 5 bis 16 Gew.-% organische Säure und/oder 0.2 bis 3 Gew.-% Mineralsäure verwendet wird, jeweils bezogen auf das Gesamtgewicht des Beschleunigers.

21. Beschleuniger nach einem der vorhergehenden Ansprüche, **dadurch gekennzeichnet, dass** bei der Herstellung 0.1 bis 10 Gew.-%, insbesondere 1 bis 5 Gew.-%, Magnesiumhydroxid oder die entsprechende Menge einer anderen Magnesiumverbindung, bezogen auf das Gesamtgewicht des Beschleunigers, vorliegt.

22. Beschleuniger nach einem der vorhergehenden Ansprüche, **dadurch gekennzeichnet, dass** bei der Herstellung 0.1 - 10 Gew.-% Alkanolamin, bezogen auf das Gesamtgewicht des Beschleunigers, vorliegt.

23. Verfahren zur Herstellung des Beschleunigers nach einem der vorhergehenden Ansprüche, **dadurch gekennzeichnet, dass** Wasser, Kieselsäure und Säure vorgelegt wird, danach Aluminiumhydroxid und anschliessend das Aluminiumsulfat zugegeben wird.

24. Verfahren zur Beschleunigung des Erstarrens und Erhärtens von hydraulischen Bindemitteln sowie daraus hergestelltem Mörtel oder Beton, **dadurch gekennzeichnet,**
**dass** einem Gemisch, welches hydraulische Bindemittel enthält, ein Erstarrungs- und Erhärtungsbeschleuniger nach den Ansprüchen 1 bis 22 in einer Menge von 0.1 bis 15 Gew.-% bezogen auf das Gewicht des hydraulischen Bindemittels zugegeben wird.

25. Verwendung des Erstarrungs- und Erhärtungsbeschleunigers nach Anspruch 1 bis 22 als Beschleuniger in einem Spritzbeton oder Spritzmörtel.

26. Bindemittel enthaltendes Gemisch, **dadurch gekennzeichnet, dass** es den Beschleuniger nach einem der Ansprüche 1 bis 22 enthält.
